(19) Europäisches Patentamt European Patent Office Office européen des brevets

(11) **EP 3 809 604 B1**

(12) **EUROPEAN PATENT SPECIFICATION**

(45) Date of publication and mention of the grant of the patent:
**29.11.2023  Bulletin 2023/48**

(21) Application number: **19203254.8**

(22) Date of filing: **15.10.2019**

(51) International Patent Classification (IPC):
$H04B\ 7/0404\ ^{(2017.01)}$    $H04B\ 7/06\ ^{(2006.01)}$
$H01Q\ 23/00\ ^{(2006.01)}$    $H01Q\ 3/34\ ^{(2006.01)}$
$H04B\ 7/0456\ ^{(2017.01)}$    $H04B\ 7/08\ ^{(2006.01)}$
$H01Q\ 3/26\ ^{(2006.01)}$

(52) Cooperative Patent Classification (CPC):
**H04B 7/0404; H04B 7/0465; H04B 7/0617; H04B 7/086**

(54) **METHOD OF OPERATING AN APPARATUS FOR TRANSMITTING AND/OR RECEIVING RADIO FREQUENCY SIGNALS**

VERFAHREN ZUM BETRIEB EINER VORRICHTUNG ZUM SENDEN UND/ODER EMPFANGEN VON HOCHFREQUENZSIGNALEN

PROCÉDÉ DE FONCTIONNEMENT D'UN APPAREIL POUR TRANSMETTRE ET/OU RECEVOIR DES SIGNAUX DE FRÉQUENCE RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.04.2021  Bulletin 2021/16**

(73) Proprietor: **Nokia Technologies Oy 02610 Espoo (FI)**

(72) Inventors:
• **Rom, Christian 02610 ESPOO (FI)**
• **Rodriguez, Adrian Jose Garcia 02610 ESPOO (FI)**

(74) Representative: **DREISS Patentanwälte PartG mbB Friedrichstraße 6 70174 Stuttgart (DE)**

(56) References cited:
**US-A1- 2013 156 120**

• **CHUNG HYEONJIN ET AL: "A Sidelobe Suppression Technique for Millimeter Wave Beamforming", 2018 24TH ASIA-PACIFIC CONFERENCE ON COMMUNICATIONS (APCC), IEEE, 12 November 2018 (2018-11-12), pages 592-597, XP033512851, DOI: 10.1109/APCC.2018.8633485 [retrieved on 2019-02-01]**
• **RFS: "APX13GV-15DV-C, Optimizer Dual-Band Dual Polarized Panel Antenna", RFS Product Catalog, 5 May 2011 (2011-05-05), XP055675903, Retrieved from the Internet: URL:http://products.rfsworld.com/product-solutions-results,560,1.html?&sol=wireless&pt=Base+Station+Antennas [retrieved on 2020-03-11]**

## Description

## Field of the invention

Exemplary embodiments relate to a method of operating an apparatus for transmitting and/or receiving radio frequency, RF, signals.

Further exemplary embodiments relate to an apparatus for transmitting and/or receiving radio frequency, RF, signals.

## Background

Apparatus and methods of the aforementioned type can be used to process radio frequency, RF, signals, e.g. for mobile radio devices for cellular communications systems.

CHUNG HYEONJIN ET AL: "A Sidelobe Suppression Technique for Millimeter Wave Beamforming", 2018 24TH ASIA-PACIFIC CONFERENCE ON COMMUNICATIONS (APCC), IEEE, 12 November 2018 (2018-11-12), pages 592-597, XP033512851 discloses a sidelobe suppression technique for millimeter wave beamforming. US 2013/156120 A1 discloses apparatus and method for reference symbol transmission in an OFDM system. RFS: "APX13GV-15DV-C, Optimizer Dual-Band Dual Polarized Panel Antenna", RFS Product Catalog, 5 May 2011 (2011-05-05), XP055675903 discloses a dual band cross polarized GSM/DCS panel antenna.

## Summary

The scope of protection sought for various embodiments of the invention is set out by the independent claims. The exemplary embodiments and features, if any, described in this specification, that do not fall under the scope of the independent claims, are to be interpreted as examples useful for understanding various exemplary embodiments of the invention.

Exemplary embodiments relate to a method of operating an apparatus for transmitting and/or receiving radio frequency, RF, signals according to claim 1, particularly for a mobile radio device for a wireless communications system, particularly a cellular communications system, said apparatus comprising an antenna system configured to selectively provide a plurality of different radiation patterns, wherein said method inter alia comprises: providing radiation pattern information characterizing at least one of a) a central beam steering angle associated with at least some of said different radiation patterns, b) an angular interference suppression range associated with at least some of said different radiation patterns, said method further comprising: at least temporarily using said radiation pattern information for transmitting and/or receiving said RF signals. This enables to dynamically (i.e., during real-time operation of said apparatus) select a radiation pattern for operation of said antenna system which enables proper transmission and/or reception of signals while at the same time reducing interference which may be caused by an interferer (e.g., further transmitter). As an example, according to exemplary embodiments, a proper transmission and/or reception of said signals may e.g. be attained by selecting a radiation pattern which comprises a main lobe in the direction of a communication partner (e.g., base station) of said apparatus (preferably with a sufficient signal to noise ratio, SNR), whereas reduction of interference may e.g. be attained by selecting said radiation pattern such that it comprises a comparatively small gain in the direction of the interferer(s).

According to further exemplary embodiments, said apparatus may be configured to transmit and/or receive RF signals in a frequency range above 6 GHz (gigahertz), particularly above 10 GHz, or above 15 GHz.

According to further exemplary embodiments, said apparatus may be configured to transmit and/or receive RF signals in the frequency range FR2 as defined by the standard 3GPP TS 38.101-2 V15.2.0 (2018-06), cf. e.g. Table 5.1-1 on p. 12.

According to further exemplary embodiments, said apparatus comprises at least one phase shifter for selecting a specific radiation pattern from said plurality of different radiation patterns, wherein said radiation pattern information further comprises at least one of: c) phase shifting values associated with said different radiation patterns for controlling said at least one phase shifter, d) gain control values associated with said different radiation patterns for controlling a gain of at least one amplifier (e.g., a power amplifier for amplifying a signal to be transmitted via said antenna system and/or one or more individual antenna elements of said antenna system, and/or a (low-noise) amplifier for amplifying one or more (received) signals of said antenna system and/or one or more individual antenna elements of said antenna system).

According to further exemplary embodiments, said phase shifting values may e.g. be organized in the form of a codebook for effecting beamforming of said antenna system, i.e. selecting a specific radiation pattern ("beam pattern"). According to further exemplary embodiments, it is also possible to organize said phase shifting values in the form of several, preferably hierarchical, codebooks.

According to further exemplary embodiments, said antenna system may comprise at least one antenna module, which may comprise at least one, preferably linear, antenna array having two or more antenna elements. According to further exemplary embodiments, preferably, said two or more antenna elements are patch antenna elements. According to further exemplary embodiments, at least one of said phase shifters as mentioned above may be assigned to at least one specific antenna element ("phased array").

According to further exemplary embodiments, said method further comprises at least one of the following steps: a) characterizing radiation patterns of said antenna system, particularly characterizing L many, L > 1, radiation patterns of said antenna system, preferably by means of measurement and/or simulation, b) determining reception and/or transmission angles for at least two radiation patterns of said antenna system, c) determining angular interference suppression ranges for at least two radiation patterns of said antenna system, d) determining phase shifting values associated with said different radiation patterns for controlling said at least one phase shifter and/or gain control values associated with said different radiation patterns for controlling a gain of at least one amplifier, e) at least temporarily storing at least one of the following elements: A) said radiation patterns of said antenna system, B) said reception and/or transmission angles, C) said angular interference suppression ranges, D) said phase shifting values.

According to further exemplary embodiments, said step of at least temporarily storing at least one of the above-listed elements A), B), C) may comprise storing said information and/or information derived from it to a codebook memory, which may preferably comprise a random access memory (RAM) or register memory or the like, which enables low latency read access.

According to further exemplary embodiments, said step of providing said radiation pattern information is performed prior to a real-time operation of said apparatus. According to further exemplary embodiments, said step of providing said radiation pattern information may comprise determining said radiation pattern information, e.g. by measurement and/or simulation. According to further exemplary embodiments, said step of providing said radiation pattern information may comprise receiving said radiation pattern information, e.g. from a further device.

According to further exemplary embodiments, said step of at least temporarily using said radiation pattern information for transmitting and/or receiving said RF signals is performed during a real-time operation of said apparatus.

According to further exemplary embodiments, said method further comprises: performing analog beamforming to select a specific radiation pattern from said plurality of different radiation patterns, preferably depending on and/or by using said radiation pattern information. According to further exemplary embodiments, said step of characterizing radiation patterns of said antenna system comprises at least one of the following steps: a) characterizing a first radiation pattern, b) initializing a first counter variable, c) determining whether reception and/or transmission angles of a predetermined number of radiation patterns have been characterized, and, if so, c1) terminating said step of characterizing radiation patterns, and, if not, c2) selecting a next radiation pattern, wherein optionally said first counter variable is incremented, d) determining reception and/or transmission angles of said next, i.e. currently selected, radiation pattern.

According to further exemplary embodiments, said method further comprises: grouping radiation patterns of said plurality of different radiation patterns depending on their respective central beam steering angle. This way, all radiation patterns having a same central beam steering angle (e.g., a direction of the main lobe of the beam pattern) may efficiently be determined and/or processed.

According to the claimed invention, said method further comprises: mapping said angular interference suppression range to a codebook level of a hierarchical codebook for performing beamforming, preferably analog beamforming, to select a specific radiation pattern from said plurality of different radiation patterns, wherein the angular range of said interference suppression range is reduced as the codebook hierarchy level increases.

The claimed invention further relates to an apparatus for transmitting and/or receiving radio frequency, RF, signals, according to claim 9, said apparatus inter alia comprising an antenna system configured to selectively provide a plurality of different radiation patterns, wherein said apparatus is configured to: provide radiation pattern information characterizing at least one of a) a central beam steering angle associated with at least some of said different radiation patterns, b) an angular interference suppression range associated with at least some of said different radiation patterns, said apparatus being further configured to: at least temporarily use said radiation pattern information for transmitting and/or receiving said RF signals.

According to further exemplary embodiments, said apparatus is configured to perform the method according to the embodiments.

Further exemplary embodiments relate to a mobile radio device, e.g. user equipment (UE) and/or a data modem, for a wireless communications system, particularly a cellular communications system, comprising at least one apparatus according to the embodiments.

The claimed invention further relates to a computer program comprising instructions which, when the program is executed by a computer, cause the computer to carry out the method according to the embodiments.

The claimed invention further relates to a computer-readable storage medium comprising instructions which, when executed by a computer, cause the computer to carry out the method according to the embodiments.

Further exemplary embodiments relate to a data carrier signal carrying the computer program according to the embodiments.

The claimed invention further relates to a use of the method according to the embodiments and/or of the apparatus according to the embodiments and/or of the computer program according to the embodiments for at least one of: a) beamforming, b) interference suppression, c) enhancing a communication performance of 3GPP 5G New Radio, NR, user equipment.

## Brief description of the figures

Some exemplary embodiments will now be described with reference to the accompanying drawings in which:

Fig. 1　schematically depicts a simplified block diagram of a communication system according to exemplary embodiments,

Fig. 2　schematically depicts a simplified flow chart of a method according to further exemplary embodiments,

Fig. 3A, 3B　each schematically depict a radiation pattern according to further exemplary embodiments,

Fig. 4　schematically depicts a simplified block diagram of radiation pattern information according to further exemplary embodiments,

Fig. 5　schematically depicts a simplified flow chart of a method according to further exemplary embodiments,

Fig. 6　schematically depicts a simplified flow chart of a method according to further exemplary embodiments,

Fig. 7　schematically depicts an antenna array according to further exemplary embodiments,

Fig. 8　schematically depicts a simplified block diagram of a plurality of antenna arrays according to further exemplary embodiments,

Fig. 9　schematically depicts a simplified block diagram of an antenna system according to further exemplary embodiments,

Fig. 10　schematically depicts a simplified block diagram of an apparatus according to further exemplary embodiments,

Fig. 11　schematically depicts an illustration of an identification of interference suppression angular ranges according to further exemplary embodiments,

Fig. 12　schematically depicts an illustration of a beam selection procedure according to further exemplary embodiments,

Fig. 13　schematically depicts a simplified flow chart of a method according to further exemplary embodiments,

Fig. 14　schematically depicts an illustration of a beam selection procedure according to further exemplary embodiments,

Fig. 15　schematically depicts a simplified block diagram of an apparatus according to further exemplary embodiments,

Fig. 16　schematically depicts an illustration of an RSRP maximization-based beam search according to further exemplary embodiments, and

Fig. 17　schematically depicts an illustration of antenna array patterns with a directional gain axis according to further exemplary embodiments.

## Description of the embodiments

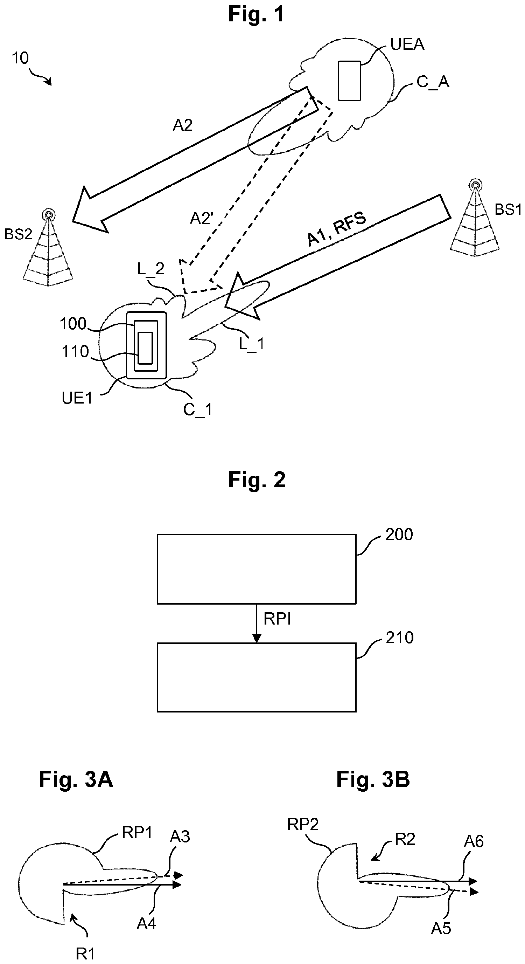

Figure 1 schematically depicts a simplified block diagram of a communication system 10 according to exemplary embodiments. Particularly, in the following, interference issues related to an operation of a mobile radio device UE1 are explained based on Fig. 1, which interference issues may be addressed by exemplary embodiments as explained further below. In the exemplary case of Fig. 1, the mobile radio device UE1 may simultaneously receive a useful signal A1 from an associated base station BS1 of said communication system 10, while perceiving a strong interference A2' from the interferer UEA, which may be a further terminal of the communication system 10 currently transmitting signals A2 to its associated base station BS2.

In this constellation, a downlink (DL) SINR (signal-to-interference-plus-noise ratio) of the mobile radio device UE1 may severely be affected by the interference A2', which may even prevent an effective communication between the base station BS1 and the mobile radio device UE1. The interference A2' may be caused by a beam characteristic or radiation pattern C_A of the interferer UEA having nonvanishing gain in the direction of the mobile radio device UE1.

Said interference A2' may be particularly disturbing if - as performed in most conventional implementations - the mobile radio device UE1 may have selected a receive radiation beam of the radiation pattern or beam characteristic C_1 of its antenna system 110 which maximizes the useful signal strength (i.e., by choosing a beam characteristic C_1 having a main lobe L_1 in the direction of its base station BS1) without accounting for the presence of the interferer UEA. This way, the nonvanishing side lobe L_2 of the beam characteristic C_1 currently depicted by Fig. 1 leads to reception of significant interference A2' from the interferer UEA.

The exemplary interference situation of the mobile radio device UE1 explained above based on Fig. 1 may further be worsened in conventional systems, particularly systems compatible with 5G New Radio based on 3GPP release 15, due to inter-UE (user equipment) TDD (time-division duplexing) pattern misalignment and intercell interference from gNodeBs BS2 that may not be connected to the mobile radio device UE1 but which may still transmit to other, adjacent UEs UEA.

In view of this, exemplary preferred embodiments propose a method as exemplarily depicted by the simplified flow chart of Fig. 2. The method relates to operating an apparatus 100 (Fig. 1) for transmitting and/or receiving radio frequency, RF, signals, RFS, particularly for a/the mobile radio device UE1 for a/the wireless communications system 10, particularly a cellular communications system, said apparatus 100 comprising an antenna system 110 configured to selectively provide a plurality of different radiation patterns, wherein said method comprises, cf. Fig. 2: providing 200 radiation pattern information RPI characterizing at least one of a) a central beam steering angle associated with at least some of said different radiation patterns, b) an angular interference suppression range associated with at least some of said different radiation patterns, said method further comprising: at least temporarily using 210 said radiation pattern information RPI for transmitting and/or receiving said RF signals RFS (Fig. 1). This enables to dynamically (i.e., during real-time operation of said apparatus 100) select a radiation pattern for operation of said antenna system 110 which enables proper transmission and/or reception of signals A1, RFS while at the same time reducing interference A2' which may be caused by an interferer UEA. In other words, said step 210 of using may comprise selecting a specific one of said radiation patterns depending on said radiation pattern information RPI.

As an example, according to exemplary embodiments, a proper transmission and/or reception of said signals A1, RFS may e.g. be attained by selecting a radiation pattern C_1 which comprises a main lobe L_1 in the direction of the incoming signal angle of arrival of a communication partner (e.g., base station BS1) of said apparatus 100, whereas reduction of interference may e.g. be attained by selecting said radiation pattern such that it (preferably additionally to the required main lobe L_1) comprises a comparatively small gain in the direction of the interferer UEA, e.g. in contrast to the side lobe L_2 as exemplarily depicted by Fig. 1.

According to further exemplary embodiments, said apparatus 100 may be configured to transmit and/or receive said RF signals RFS in a frequency range above 6 GHz (gigahertz), particularly above 10 GHz, or above 15 GHz.

According to further exemplary embodiments, said apparatus 100 may be configured to transmit and/or receive RF signals in the frequency range FR2 as defined by the standard 3GPP TS 38.101-2 V15.2.0 (2018-06), cf. e.g. Table 5.1-1 on p. 12.

Fig. 3A, 3B each schematically depict a radiation pattern RP1, RP2 according to further exemplary embodiments. As can be seen, the radiation pattern RP1 of Fig. 3A comprises a main lobe in a direction A3, while arrow A4 denotes a reference direction, and the radiation pattern RP2 of Fig. 3B comprises a main lobe in a direction A5, while arrow A6 of Fig. 3B denotes said reference direction. According to further exemplary embodiments, and as will be explained in detail further below, said radiation patterns RP1, RP2 may belong to a same group of radiation patterns, since they can enable to transmit/receive signals towards/from an angle characterized by the respective reference axis A4, A6. However, as can also be seen in Fig. 3A, 3B, said radiation patterns RP1, RP2 differ in that they have regions R1, R2 with a comparatively small gain, which may be used to suppress interference A2' (Fig. 1) from an interferer. Note that while Fig. 3A, 3B exemplarily depict two different radiation patterns which may e.g. be used by said apparatus 100 (Fig. 1), according to further exemplary embodiments, there may be more than two different radiation patterns, e.g. 4 or more, preferably eight or more, more preferably 16 or more, which may e.g. depend on properties of the antenna system 110.

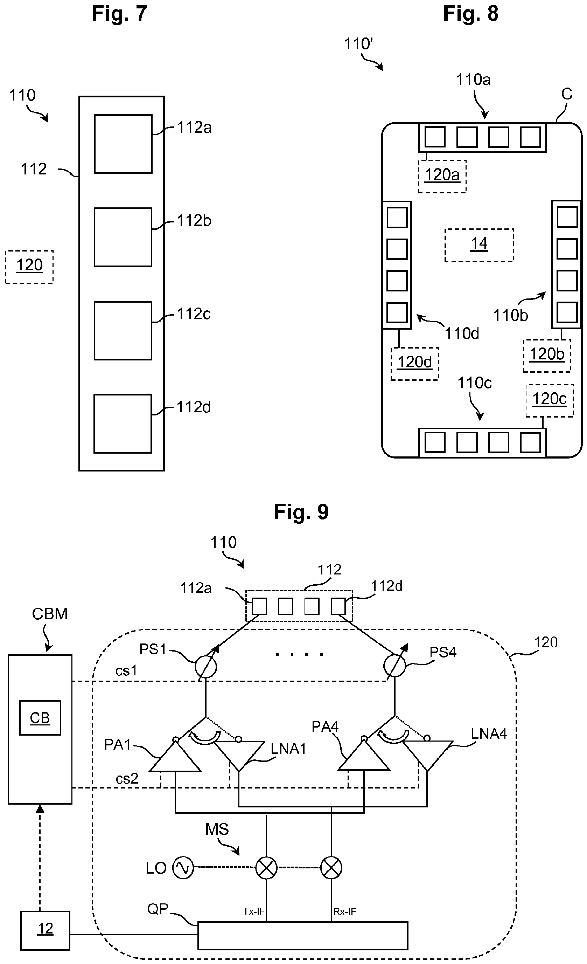

According to further exemplary embodiments, said apparatus 100 (Fig. 1) comprises at least one phase shifter (not shown in Fig. 1, cf. e.g. element PS1 of Fig. 9) for selecting a specific radiation pattern from said plurality of different radiation patterns RP1, RP2, wherein said radiation pattern information RPI (Fig. 2) further comprises: c) phase shifting values psv associated with said different radiation patterns RP1, RP2 for controlling said at least one phase shifter.

According to further exemplary embodiments, said phase shifting values may e.g. be organized in the form of a codebook for effecting beamforming of said antenna system 110 of the apparatus 100, i.e. selecting a specific radiation pattern ("beam pattern"). According to further exemplary embodiments, it is also possible to organize said phase shifting values in the form of several, preferably hierarchical, codebooks.

According to further exemplary embodiments, said apparatus 100 (Fig. 1) comprises at least one amplifier (not shown in Fig. 1, cf. e.g. elements PA1, .., PA4 and/or LNA1, .., LNA4 of Fig. 9) for selecting a specific radiation pattern from said plurality of different radiation patterns RP1, RP2, wherein said radiation pattern information RPI (Fig. 2) further comprises: d) gain control values gcv associated with said different radiation patterns for controlling a gain of at least one amplifier (e.g., a power amplifier for amplifying a signal to be transmitted via said antenna system and/or one or more individual antenna elements of said antenna system, and/or a (low-noise) amplifier for amplifying one or more signals of said antenna system and/or one or more individual antenna elements of said antenna system).

According to further exemplary embodiments, and similar to said phase shifting values psv, said gain control values gcv may e.g. be organized in the form of a codebook for effecting beamforming of said antenna system 110 of the apparatus 100, i.e. selecting a specific radiation pattern ("beam pattern"). According to further exemplary embodiments, it is also possible to organize said gain control values in the form of several, preferably hierarchical, codebooks.

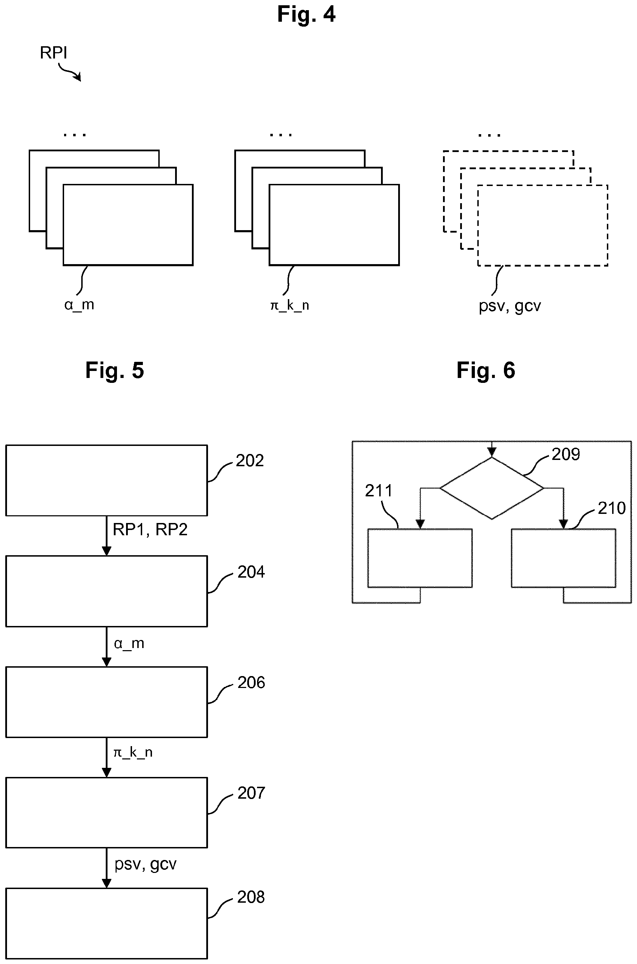

According to further exemplary embodiments, both said phase shifting values psv and said gain control values gcv may e.g. be organized in the form of a (common) codebook for effecting beamforming of said antenna system 110 of the apparatus. According to further exemplary embodiments, it is also possible to organize said phase shifting values together with said gain control values in the form of several, preferably hierarchical, codebooks.Figure 4 schematically depicts a simplified block diagram of radiation pattern information RPI according to further exemplary embodiments. The radiation pattern information RPI may e.g. comprise one or more a central beam steering angle values $\alpha\_m$ associated with at least some of said different radiation patterns RP1, RP2, and/or one or more angular interference suppression range values $\pi\_k\_n$ associated with at least some of said different radiation patterns RP1, RP2, and/or one or more phase shifting values psv associated with said different radiation patterns RP1, RP2. As an example, according to further exemplary embodiments, one specific radiation pattern RP1 may be associated with e.g. one central beam steering angle value $\alpha\_m$ (e.g., indicating the direction A3 (Fig. 3A) of the main lobe of the radiation pattern), with at least one angular interference suppression range value $\pi\_k\_n$ (e.g., indication a region R1 (Fig. 3A) of the radiation pattern RP1 comprising a comparatively small gain), and with one or more phase shifting values psv that may be used to select said specific radiation pattern RP1.

According to further exemplary embodiments, said method of operating the apparatus 100 (Fig. 1) further comprises at least one of the following steps, cf. Fig. 5: a) characterizing 202 radiation patterns RP1, RP2 of said antenna system 110, particularly characterizing L many, L > 1, radiation patterns of said antenna system 110 (Fig. 3A, 3B exemplarily depict two radiation patterns RP1, RP2), preferably by means of measurement (e.g., with a reference device 100) and/or simulation, b) determining 204 (Fig. 5) reception and/or transmission angles $\alpha\_m$ (cf. e.g. the arrows A3, A5 of Fig. 3A, 3B) for at least two radiation patterns RP1, RP2 of said antenna system 110, c) determining 206 (Fig. 5) angular interference suppression ranges $\pi\_k\_n$ for at least two radiation patterns RP1, RP2 of said antenna system 110 (Fig. 1), d) determining 207 (Fig. 5) phase shifting values psv (and/or gain control values gcv) associated with said different radiation patterns RP1, RP2 for controlling said at least one phase shifter of said antenna system 110, e) at least temporarily storing 208 at least one of the following elements: A) said radiation patterns RP1, RP2 of said antenna system 110, B) said reception and/or transmission angles $\alpha\_m$, C) said angular interference suppression ranges $\pi\_k\_n$, D) said phase shifting values psv.

According to further exemplary embodiments, said step of at least temporarily storing 208 at least one of the above-listed elements A), B), C) may comprise storing said data to a codebook memory CBM (cf. Fig. 9 explained further below), which may preferably comprise a ROM (read only memory) or random access memory (RAM) or register memory or EPROM (erasable programmable ROM) or the like, which enables low latency read access.

According to further exemplary embodiments, said step 200 (Fig. 2) of providing said radiation pattern information is performed prior to a real-time operation of said apparatus 100, preferably during a non-real-time operation of said apparatus. Similarly, according to further exemplary embodiments, at least some of said steps 202, 204, 206, 207, 208 are performed prior to a real-time operation of said apparatus 100.

According to further exemplary embodiments, said step 210 (Fig. 2) of at least temporarily using said radiation pattern information RPI for transmitting and/or receiving said RF signals RFS (Fig. 1) is performed during a real-time operation of said apparatus 100, e.g. for performing transmission and/or reception of radio frequency signals RFS with further devices BS1.

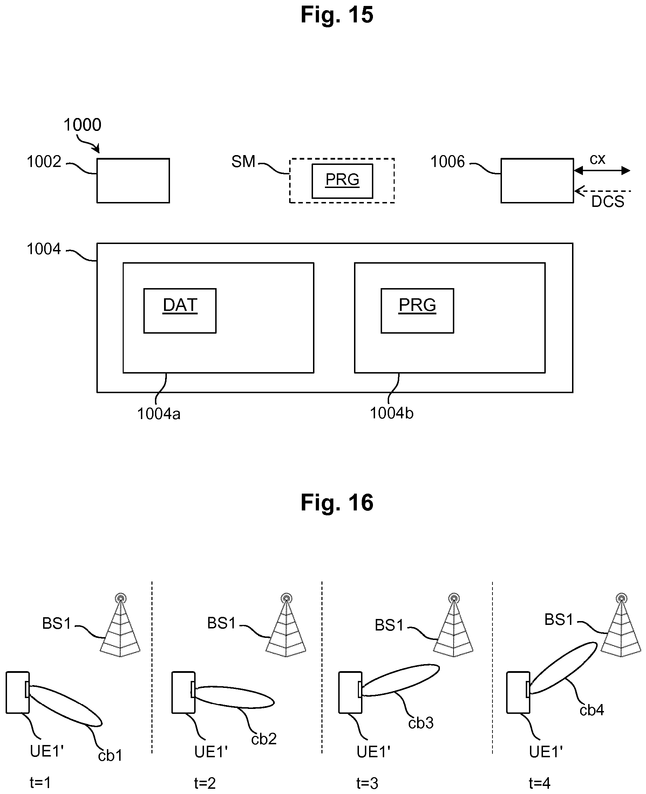

Figure 6 schematically depicts a simplified flow chart of a method according to further exemplary embodiments. In step 209, the apparatus 100 (Fig. 1) determines whether a signal to interference ratio, SIR, is below a predetermined first threshold. If so, it may be concluded that significant interference A2' (Fig. 1) is present. According to further exemplary embodiments, if said SIR is below said predetermined first threshold, the method proceeds to step 210, in which said radiation pattern information RPI (Fig. 2, 4) is used for selecting a radiation pattern for transmitting and/or receiving radio frequency signals RFS. This way, an efficient interference suppression may be efficiently attained, e.g. by selecting, in step 210, a radiation pattern RP2 that comprises a comparatively low gain in the direction of the interferer UEA (and preferably also a main lobe L_1 in the direction of a communication partner BS1). According to further exemplary embodiments, this procedure may also be denoted as "fast beam selection for interference suppression", as it may be effected depending on existing radiation pattern information RPI that may be kept readily available, i.e. for real-time access. Returning to step 209 of Fig. 6, however, if said SIR is greater than or equal to said predetermined first threshold, a conventional radiation pattern selection 211 may be performed, e.g. based on the principle of Reference Signal Received Power (RSRP) maximization, which is explained below with reference to Fig. 16, which may e.g. be acceptable for cases with less interference.

In the baseline scheme as exemplarily depicted by Fig. 16, a mobile radio device UE1' may select an optimal radiation beam as that providing the maximum RSRP - without accounting for the presence of interference - after a search over a predetermined set of (presently for example four) candidate beams cb1, cb2, cb3, cb4. As exemplarily illustrated in Fig. 16, the RSRP-based beam search process would generally have a duration of around T = 8 time slots in a typical implementation but would result in a poor signal reception in case of interference due to the lack of interference suppression, as e.g. provided by the radiation patterns RP1, RP2 of Fig. 3A, 3B. However, in those cases with high SIR values, as e.g. determined by step 209 of Fig. 6, the apparatus 100 or its target device UE1 may use the conventional RSRP-based procedure as it may be sufficient due to the comparatively low degree of interference. For other cases, however, according to further exemplary embodiments, the more sophisticated approach of step 210 may be used, which enables to efficiently suppress interference, e.g. using a specific radiation pattern RP1, RP2 that does not only comprise a main lobe for signal reception and/or transmission, but also at least one "notch" or region R1, R2 (Fig. 3A, 3B) with a comparatively small gain to suppress said interference.

According to further exemplary embodiments, said apparatus 100 (Fig. 1) performs analog beamforming to select a specific radiation pattern RP1, RP2 from said plurality of different radiation patterns, preferably depending on and/or by using said radiation pattern information RPI.

According to further exemplary embodiments, cf. Fig. 7, said antenna system 110 may comprise at least one, preferably linear, antenna array 112 having two or more antenna elements 112a, 112b, 112c, 112d. According to further exemplary embodiments, preferably, said two or more antenna elements are patch antenna elements. According to further exemplary embodiments, one of said phase shifters as mentioned above may be assigned to at least one specific antenna element. According to further exemplary embodiments, the phase shifters and/or other components may be provided in an antenna module 120 assigned to the antenna system 110.

Figure 8 schematically depicts a simplified block diagram of an antenna system 110' according to further exemplary embodiments. The antenna system 110' comprises four antenna arrays 110a, 110b, 110c, 110d exemplarily arranged at opposing edges of a common carrier C such as a printed circuit board (PCB). Optionally, each antenna array 110a, 110b, 110c, 110d may comprise an antenna module 120a, 120b, 120c, 120d configured to perform beamforming, e.g. analog beamforming, i.e. to select one of said plurality of radiation patterns RP1, RP2 (Fig. 3A, 3B) for transmitting and/or receiving said radio frequency signals RFS. An operation of said antenna modules 120a, 120b, 120c, 120d may, according to further exemplary embodiments, e.g. be coordinated and/or controlled by an optional control unit 14, which may also comprise at least some functions of a baseband processing unit, BBU, e.g. of the mobile radio device UE1 (Fig. 1).

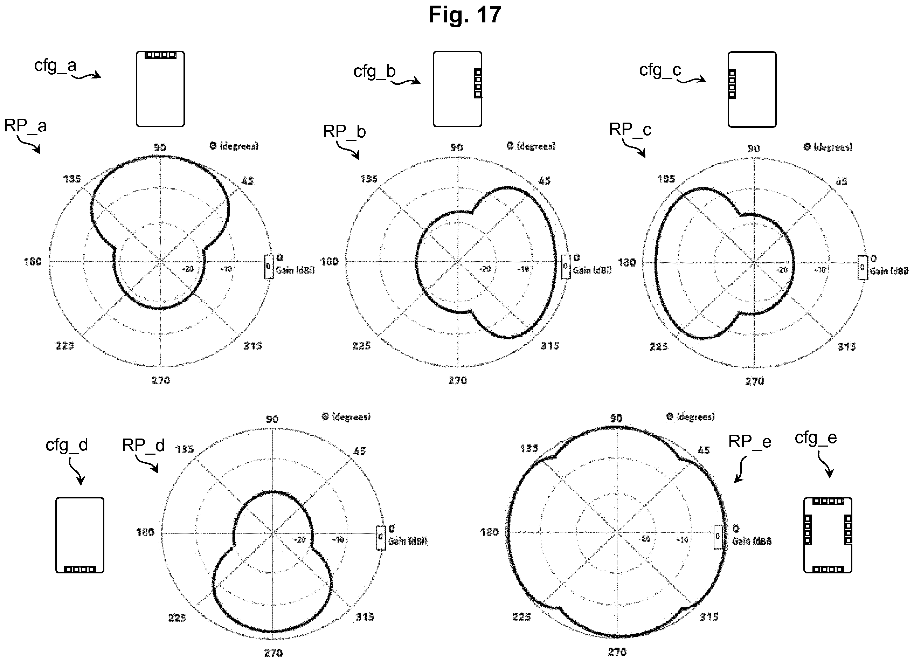

Figure 17 schematically depicts an illustration of exemplary radiation patterns RP_a, RP_b, RP_c, RP_d, RP_e with a directional gain axis according to further exemplary embodiments, which may e.g. be attained with the antenna system 110' of Fig. 8, e.g. by selectively using a respective antenna configuration cfg_a, cfg_b, cfg_c, cfg_d, cfg_e as also schematically depicted by Fig. 17. According to further exemplary embodiments, said exemplary configurations cfg_a, cfg_b, cfg_c, cfg_d, cfg_e may e.g. be attained by selectively activating the respective antenna arrays 110a, 110b, 110c, 110d (also cf. Fig. 8) not individually referenced in Fig. 17 for the sake of clarity. Also note that the exemplary configurations cfg_a, cfg_b, cfg_c, cfg_d, cfg_e and the corresponding radiation patterns RP_a, RP_b, RP_c, RP_d, RP_e depicted by Fig. 17 represent comparatively simple examples illustrating aspects of the principle according to exemplary embodiments. According to further exemplary embodiments, the procedure can be readily extended to more complex configurations (e.g., applying different phase shifts to different antenna elements of different antenna arrays) and correspondingly more complex radiation patterns. This way, according to further exemplary embodiments, e.g. radiation patterns similar to the types RP_1, RP2 of Fig. 3A, 3B, e.g. comprising one distinct main lobe and at least one "notch" (region with comparatively small gain, e.g., usable for interference suppression) may be attained.

According to further exemplary embodiments, using said antenna system 110' (Fig. 8), the apparatus 100 (Fig. 1) may perform a conventional beam search procedure (e.g., similar to the exemplary scenario of Fig. 16) to select one of said antenna arrays 110a, 110b, 110c, 110d for transmitting and/or receiving radio frequency signals RFS. Without loss of generality, the further explanations with reference to Fig. 9 are based on the assumption that such conventional beam search procedure has been performed, and that one single antenna array 110a of the antenna system 110' has been selected based thereon. However, according to further exemplary embodiments, more than one antenna array 110a of the antenna system 110' may also be used.

Figure 9 schematically depicts a simplified block diagram of an antenna module 120 according to further exemplary embodiments. Said antenna module 120 may inter alia be used for analog beamforming according to further exemplary embodiments, e.g. to select, by means of said beamforming, a specific one of said plurality of radiation patterns RP1, RP2 (Fig. 3A, 3B).

According to further exemplary embodiments, said antenna module 120 may e.g. comprise at least one of the following elements: (preferably analog) phase shifter PS1, .., PS4, power amplifier (PA) PA1, .., PA4, low noise amplifier (LNA) LNA1, .., LNA4.

According to further exemplary embodiments, said antenna module 120 may e.g. comprise a mixer stage MS with a local oscillator LO, e.g. for upconverting IF range input signals Tx-IF (as e.g. obtained by a radio unit assigned to said antenna module 120) to a desired target RF range, wherein said desired target RF range e.g. lies within the FR2 range of the 5G standard, as explained above.

According to further exemplary embodiments, said IF range input signals Tx-IF may be obtained from a quadplexer QP receiving an analog IF signal from the radio unit 12.

As can be seen from Fig. 9, said antenna module 120 comprises a linear antenna array 112 as explained above with respect to Fig. 7, i.e. comprising four individual antenna elements 112a, .., 112d. To provide an input signal to the first antenna element 112a, the mixer stage MS of the antenna module 120 of Fig. 9 upconverts said IF range input signal Tx-IF, amplifies it by means of a first power amplifier PA1, (optionally) applies a phase shift to the so amplified signal by means of a first phase shifter PS1, and provides said optionally phase-shifted signal to the first antenna element 112a. Similar processing in the transmit direction is performed by the further three Tx (transmit) branches of the secondary antenna module 120 only the fourth of which is designated with reference signs PA4, PS4 in Fig. 9 for reasons of clarity.

A desired radiation pattern for transmitting RF signals may be selected by applying control signals cs1, cs2 to the phase shifters PS1, .., PS4 and/or to the power amplifiers PA1, .., PA4. According to further exemplary embodiments, said control signals cs1, cs2 may be provided by a codebook memory CBM comprising one or more codebooks CB comprising e.g. phase shifting values psv and/or gain control values gcv as explained above that enable to attain a specific radiation pattern RP1, RP2 when applying said phase shifting values psv to said phase shifters PS1, .., PS4 in the form of said control signals cs1, for example, and/or when applying said gain control values gcv to said amplifiers LNA1, .., LNA4 and/or PA1, .., PA4 in the form of said control signals cs2.

According to further exemplary embodiments, said phase shifters PS1, .., PS4 are bidirectional phase shifters, thus enabling to effect a phase shift of processed signals both in a transmit direction and in a receive direction. This way, for both the transmit case and the receive case, a desired radiation pattern can be selected, e.g. under control of said codebook CB, the contents of which, in turn, may, according to further exemplary embodiments, be derived from said radiation pattern information RPI (Fig. 4).

According to further exemplary embodiments, a corresponding receive branch of the antenna module 120, e.g. associated with the first antenna element 112a, may comprise said first phase shifter PS1, a first LNA LNA1, the mixer stage MS, and the quadplexer. The further three receive branches comprise a similar structure and function, together providing, at an output of the mixer stage MS, i.e. after downconversion, a receive signal Rx-IF in an IF range (i.e., downconverted from an RF range e.g. in the FR2 range of the 5G standard).

Similar to the selection of a radiation pattern RP1, RP2 for transmitting signals, a specific radiation pattern RP1, RP2 may also be selected for the receive case by applying the control signals cs1 and/or cs2 to e.g. the phase shifters PS1, .., PS4, and/or to the low noise amplifiers LNA1, .., LNA4 preferably depending on the information comprised within the codebook memory CBM.

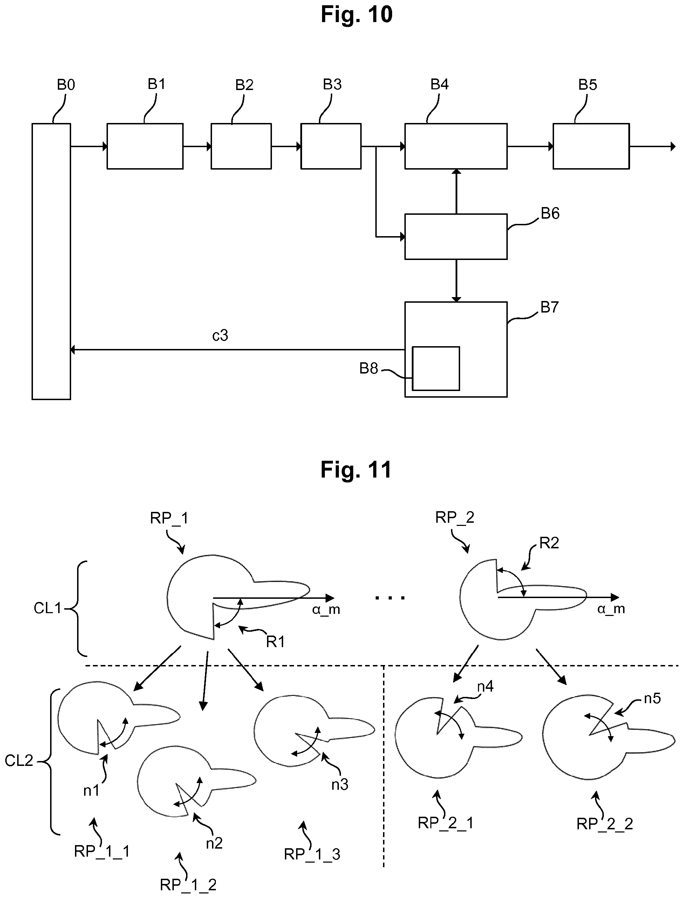

Figure 10 schematically depicts a simplified block diagram of an apparatus according to further exemplary embodiments. Depicted is an exemplary architecture for a receiver baseband processing device, wherein block B0 depicts a digital radio frequency interface, block B1 depicts a cyclic prefix (CP) removal stage, block B2 depicts an synchronization ("synch") stage, block B3 depicts an FFT (Fast Fourier Transform) stage, block B4 depicts a MIMO (multiple-input multiple-output) equalization stage, block B5 depicts a channel decoding stage, block B6 depicts a channel estimation stage, block B7 depicts a beam management device, and block B8 depicts a null steering device which may be configured to perform at least some steps of the method according to the embodiments (e.g., as exemplarily depicted by Fig. 2, 5, 13).

According to further exemplary embodiments, said null steering device B8 may be configured to provide baseband control signals c3 to said codebook memory CBM (Fig. 9). wherein preferably said baseband control signals c3 control which data of the codebook memory CBM to apply to the phase shifters and/or to the amplifier(s), e.g. for performing (analog) beamforming, whereby a desired radiation pattern RP1, RP2 may be selected.

Figure 11 schematically depicts an illustration of a determination and/or identification of interference suppression angular ranges according to further exemplary embodiments, e.g. similar to step 206 of Fig. 5.

According to further exemplary embodiments, a radiation pattern RP_1, RP_2 (Fig. 11) pointing towards the radiation angle $\alpha_m$ may be determined/identified as a potential candidate radiation pattern for suppressing incoming/generated interference from/to a given angular range $\pi_{kn}$, if its radiation pattern gain is, preferably consistently, below a threshold $T_n$ throughout the angular range $\pi_{kn}$. According to further exemplary embodiments, the angular size of the interference suppression ranges is decreased per codebook level CL1, CL2, which may facilitate a more accurate placement of radiation (gain) "nulls" and a hence better interference suppression. In this context, a first codebook level is indicated in Fig. 11 with reference sign CL1, and a second codebook level is indicated in Fig. 11 with reference sign CL2. As can be seen, for example three radiation patterns RP_1_1, RP_1_2, RP_1_3 having comparatively small (regarding an angular range) "notches" (i.e., angular regions with a comparatively small gain) n1, n2, n3, as compared to the "notch" region R1 of the first radiation pattern RP_1 of codebook level CL1, may be derived from said first radiation pattern RP_1 of codebook level CL1, whereas exemplarily two radiation patterns RP_2_1, RP_2_2 of codebook level CL2 may be derived from the further radiation pattern RP_2 of codebook level CL1.

In other words, a comparatively coarse interference suppression may already be attained by using the first radiation patterns RP_1, RP_2 according to the first codebook level CL1, using the small gain regions R1, R2 (having an angular range of about 90 degree each), while a finer (i.e., more selective regarding angular range) interference suppression may be attained when using radiation patterns associated with the second codebook level CL2.

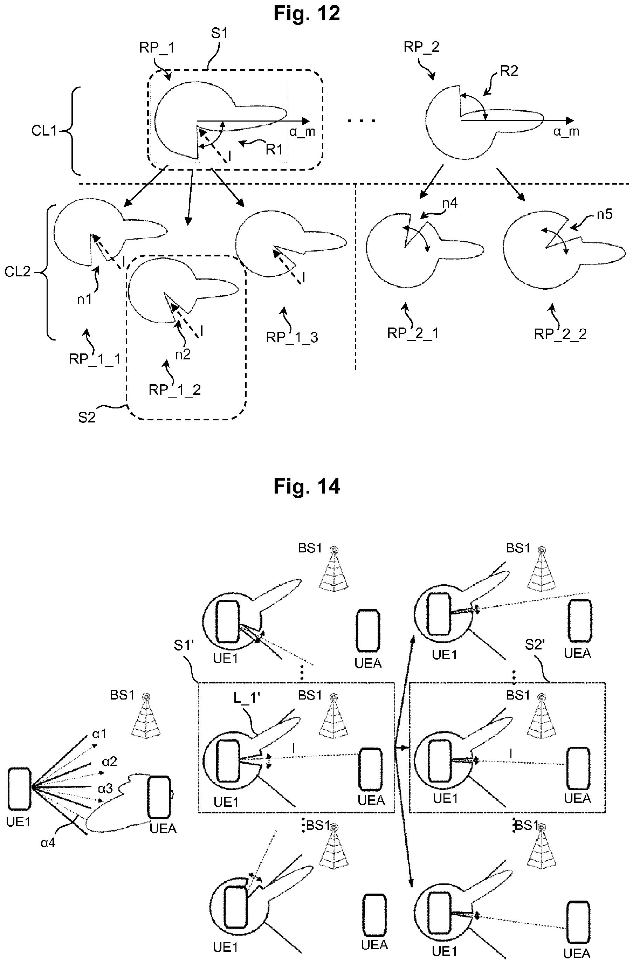

Figure 12 schematically depicts an illustration of a beam selection procedure according to further exemplary embodiments, which may e.g. form part of step 210 of Fig. 2. According to further exemplary embodiments, upon detection or prediction of a low signal-to-interference-ratio (SIR) (also cf. e.g. step 209 of Fig. 6, the apparatus 100 or the mobile radio device UE1 (Fig. 1) comprising said apparatus 100 may identify a central beamsteering angle $\alpha_m*$ - and accordingly a group m* of candidate radiation patterns - that maximize the signal-to-noise ratio (SNR), cf. e.g. the first codebook level CL1 as indicated by Fig. 12. According to the present example of Fig. 12, e.g. the radiation patterns RP_1, .., RP_2 may represent such candidate radiation patterns.

According to further exemplary embodiments, for each codebook level CL1, CL2, the apparatus 100 may identify the interference suppression angular range that maximizes the SINR. Once identified, the set of candidate interference suppression angular ranges for the following codebook level CL2 are selected as those contained within the selected interference suppression angular range of the previous codebook level CL1. In this respect, the dashed rounded rectangle S1 of Fig. 12 indicates the selected radiation pattern RP_1 of the first codebook level CL1 (providing an interference suppression angular range of about 90° degrees, comprising the interferer's interference signal I), and the dashed rounded rectangle S2 of Fig. 12 indicates the selected radiation pattern RP_1_2 of the second codebook level CL2 (providing an interference suppression angular range of less than 90° degrees, e.g. about 20 degrees, but also comprising the interferer's interference signal I), which satisfies the criteria, as its "notch" n2 is substantially aligned with the direction of arrival of the interferer's interference signal I.

According to inventors' analysis, the proposed scheme based on the principle according to the embodiments enables a significant reduction of a time necessary to accurately suppress an interference I perceived from a given source, when compared to some conventional methods, which are e.g. based on an exhaustive beam search in a search space covering a large number of different radiation patterns.

According to further exemplary embodiments, and as discussed in the following, the principle according to the embodiments may be particularly useful in high-frequency scenarios where 1) the UE UE1 implementing the proposed method has a large number of antenna elements (cf. e.g. Fig. 8) and/or high-resolution phase shifters (e.g., enabling a large number of different radiation patterns to be selected) - which heavily penalize said exhaustive search methods - and 2) a channel between the UE UE1 implementing the proposed method and the active interference source UEA (Fig. 1) varies, e.g., in scenarios where a) the interferer UEA and/or the device UE1 implementing the method according to exemplary embodiments are moving, b) there is more than one bursty interference source UEA (that may activate at different times, e.g. several interfering UEs UEA), and/or c) the radio frequency environment is dynamic.

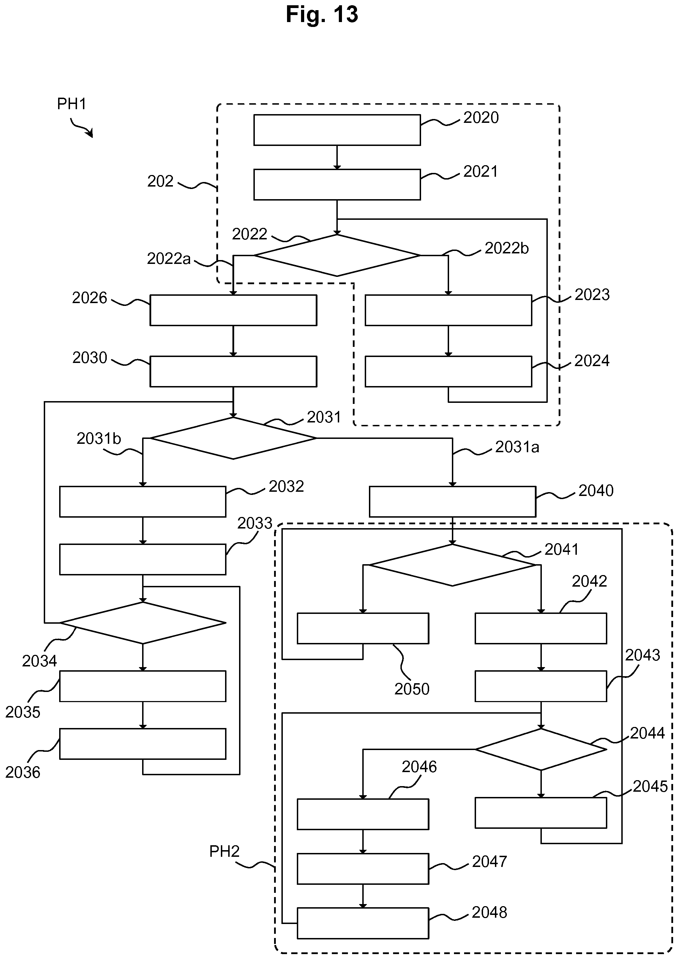

In the following, further exemplary embodiments and aspects e.g. of operating the apparatus 100 (Fig. 1) and/or the mobile radio device UE1 are explained with respect to Figures 13, 14. Note that while exemplary embodiments discussed in the following section primarily focus on an exemplary implementation of the method in a single antenna array 110 (Fig. 7), according to further exemplary embodiments the procedure can be readily extended to account for the multiple antenna arrays 110a, 110b, 110c, 110d of the antenna system 110' of Fig. 9, which may e.g. be used for mobile radio devices UE1 (Fig. 1) that may be configured to operate according to 5G NR techniques, also cf. Fig. 17.

According to further exemplary embodiments, one or more of the following elements may be provided, e.g. as "input data" or input information: 1) Number N of codebook hierarchy levels (e.g., N = 2 codebook hierarchy levels, cf. Fig. 11), 2) a reference apparatus 100 (Fig. 1) or a reference UE UE1 (e.g., for performing step 200 of Fig. 2 and/or one or more of said steps 202, 204, 206, 207, 208 of Fig. 5), or reference UE antenna and radio frequency (RF) components characterization (e.g., for a simulation using simulation tools, e.g. for determining information similar or identical to that as may be determined in the course of step 200 of Fig. 2 and/or one or more of said steps 202, 204, 206, 207, 208 of Fig. 5).

According to further exemplary embodiments, a first phase PH1, cf. the flow-chart of Fig. 13, may be a non-real time phase, which may e.g. be denoted as a "reverse hierarchical codebook generation", whereas a second phase PH2 may be a real-time phase, in which information determined and/or processed during the first phase PH1 may be used for transmitting and/or receiving said radio frequency signals RFS, e.g. for beam steering and/or for interference suppression.

Returning to the first phase PH1, step 2020 comprises a characterization of different radiation patterns RP1, RP2 (Fig. 3A, 3B), which may e.g. be performed according to step 200 of Fig. 2 and/or according to at least one of the steps of the method according to Fig. 5. As an example, measurements performed in a controlled environment, and/or simulation tools may be used for step 2020, e.g. to exhaustively characterize $L$ many different radiation patterns (in the following also denoted as "antenna array patterns") $\beta_i, i \in \{1, \dots, L\}$ generated by a reference UE UE1, e.g. when applying different phase shifting values psv per antenna element (Fig. 7).

According to further exemplary embodiments, in step 2021, a first counter variable l is initialized to 0, i.e. l = 0, and in step 2022, it is determined whether all of said $L$ many different radiation patterns of said UE UE1 have been characterized, e.g. by determining l == L ?. If so, the method proceeds, cf. arrow 2022a, to a grouping step 2026 explained further below. If not, i.e. if in step 2022 it is determined that not (yet) all of said $L$ many different radiation patterns of said UE UE1 have been characterized, the method proceeds, cf. arrow 2022b, with step 2023, in which the next radiation pattern to be characterized is selected, e.g. by incrementing the counter variable l, i.e. l = l + 1. After that, in step 2024, at least one reception and/or transmission angle $\alpha\_m$ for the currently selected radiation pattern is determined and/or identified, e.g. be determining a specific angle of the currently selected radiation pattern which is associated with a maximum gain. In other words, according to further exemplary embodiments, said specific angle of the currently selected radiation pattern which is associated with said maximum gain is associated with the main lobe L_1 (Fig. 1) of the currently selected radiation pattern. After step 2024, the method returns to step 2022. Once all L many radiation patterns are characterized, e.g. by determining for each of said L many radiation patterns a respective reception and/or transmission angle $\alpha\_m$ (and/or the direction of the main lobe L_1, respectively), according to further exemplary embodiments, the method may proceed to the step 2026.

According to further exemplary embodiments, the group of steps 2020, 2021, 2022, 2023, 2024 of Fig. 13 may also be considered to form a specific implementation of the characterizing step 202 of Fig. 5.

After said characterization 202, the method of Fig. 13 proceeds to the step 2026 comprising grouping said L many radiation patterns depending on their respective central beam steering angle $\alpha\_m$. According to further exemplary embodiments, for each of the L many antenna array patterns characterized in step 202, *M* many groups of antenna array patterns may be identified and/or generated. According to further exemplary embodiments, a radiation pattern or antenna array pattern $\beta_i$ may belong to the $m^{th}$ group (written as $\beta_{i,m}$) if the array radiation gain of $\beta_i$ is above a pre-defined value of $\sigma$ dBi at the radiation angle $\alpha_m \in [0°, 360°]$. In plain words, according to further exemplary embodiments, antenna array patterns belonging to a given group can receive/transmit signals towards the radiation angle $\alpha_m$. As an example, the exemplary radiation patterns RP1, RP2 of Fig. 3A, 3B may belong to a same group, as their main lobes A3, A5 are substantially (i.e., within a predetermined angular tolerance range, which may, according to further exemplary embodiments, e.g. depend on a total number L of different radiation patterns) aligned with the reference axis A3, A6. Notice that according to further exemplary embodiments the same antenna array pattern can belong to different groups.

According to the claimed invention, in steps 2030 to 2036, inter alia an identification of interference suppression angular ranges per antenna array pattern and, based on that criteria, mapping of said angular ranges to a codebook level, is performed.

As an example, according to further exemplary embodiments, for each (of the e.g. initially defined N many) codebook hierarchy level $n$, it may be proceeded as follows:

a) sub-divide the angular domain into $K_n$ many angular interference suppression ranges of $\varphi_n$ degrees, where $\varphi_{n1} > \varphi_{n2}$ whenever $n1 > n2$. According to the claimed invention, the angular range of each interference suppression range $\varphi_n$ is reduced as the codebook hierarchy level $n$ increases, also cf. the exemplary depiction of Fig. 11. Each of these angular ranges may e.g. be denoted as $\pi_{kn}$.

According to further exemplary embodiments, for each of the $m$ many groups generated in step 2026, and for each of the antenna array patterns $\beta_{i,m}$ belonging to the $m^{th}$ antenna group, b) classify the antenna array pattern $\beta_{i,m}$ pointing towards the radiation angle $\alpha_m$ as a potential candidate radiation pattern $\beta_{i,m}^{\pi_{kn}}$ for suppressing the incoming/generated interference I (Fig. 12) from/to the angular range $\pi_{kn}$, if its antenna array gain is consistently below a threshold $T_n$ throughout $\pi_{kn}$. While in this exemplary embodiment a simplified description is provided for illustrative purposes, practical implementations according to further exemplary embodiments of the proposed method may account for that each antenna array radiation pattern may generate a multiplicity of radiation nulls in different angular directions, i.e. more complex radiation patterns such as e.g. with a plurality of notches for interference suppression are possible. According to further exemplary embodiments, the set of all potential candidate radiation patterns pointing towards the radiation angle $\alpha_m$ and that suppress the incoming/generated interference from/to the angular range $\pi_{kn}$ is denoted as $\boldsymbol{\beta}_m^{\pi_{kn}}$.

According to further exemplary embodiments, from the set of all potential candidate radiation patterns $\boldsymbol{\beta}_m^{\pi_{kn}}$, the best candidate $\bar{\beta}_m^{\pi_{kn}}$ may be selected as that whose main radiation beam has maximum antenna array gain in the direction of $\alpha_m$ (e.g., corresponding to the "biggest" main lobe L_1). According to further exemplary embodiments, the rest of candidate antenna patterns belonging to $\beta_m^{\pi_{kn}}$ may be discarded.

Returning to the flow-chart of Fig. 13, according to further exemplary embodiments, in step 2030, a second counter variable n is initialized to 0, i.e. n = 0, and in step 2031 it is determined whether all of said N many codebook hierarchy levels for interference suppression have been characterized, e.g. by determining n == N ?.

If so, the method proceeds, cf. arrow 2031a, to a step 2040 explained further below. If not, i.e. if in step 2031 it is determined that not (yet) all of said N many codebook hierarchy levels for interference suppression have been characterized, the method proceeds, cf. arrow 2031b, with step 2032, in which a next codebook hierarchy level n with interference suppression angular ranges of $\varphi_n$ degrees is selected, e.g. by incrementing said second counter variable n, e.g.: n = n + 1.

After that, according to further exemplary embodiments, a third counter variable m for counting the abovementioned M many groups is initialized in step 2033, e.g. m = 0.

After that, in step 2034, it is determined whether the interference suppression angular ranges of the radiation patterns in the m-th (e.g., currently selected by said third counter variable m) group have been characterized. If so, the method proceeds with step 2031. If not, the method proceeds with step 2035, in which a next radiation pattern group m is selected, e.g. by incrementing said third counter variable m, e.g. according to m = m + 1. After that, in step 2036, each radiation pattern in the m-th group may be classified as a candidate to suppress interference in a given angular range of $\varphi_n$ degrees, if its radiation pattern gain is consistently below said threshold $T_n$.

According to further exemplary embodiments, aspects of the steps 2030 to 2036 may also be considered as mapping, collectively denoted with reference sign 2028 in Fig. 13, said angular interference suppression range n_k_n to a codebook level of a codebook CB (Fig. 9) for performing beamforming.

According to further exemplary embodiments, a further step 2040 may be performed, particularly once all of said N many codebook hierarchy levels n for interference suppression have been characterized, as may be determined in step 2031. According to further exemplary embodiments, step 2040 may comprise: introducing (i.e., providing), for example in a memory (e.g., ROM of the apparatus 100 and/or the UE UE1), at least one of: a) the (preferably M many) central beam steering angles $\alpha_m$ of the $M$ groups, b) the $k_n$ angular interference suppression ranges $\pi_{kn}$ for each of said (preferably N many) codebook hierarchy levels $n$, c) the phase shifting values psv (also cf. Fig. 5) usable to generate each of

the radiation patterns $\bar{\beta}_m^{\pi_{kn}}$ that point towards the central beam steering angle $\alpha_m$ and suppress interference in the angular range $\pi_{kn}$.

According to further exemplary embodiments, one or more aspects of step 2040 may also be comprised within the providing step 200 of Fig. 2 as explained above.

According to further exemplary embodiments, once the information obtained in phase PH1 is provided (which information may e.g. be considered as the radiation pattern information RPI explained in detail further above), cf. e.g. step 2040 of Fig. 13, said information RPI obtained in phase PH1 may be used by the apparatus 100 or the UE UE1 comprising said apparatus. According to further exemplary embodiments, the radiation pattern information RPI may e.g. be used within a real-time phase as indicated by the dashed rectangle PH2 of Fig. 13. According to further exemplary embodiments, aspects of the phase PH2 may also be denoted as "reverse hierarchical codebook operation for interference suppression during reception".

Upon detection or prediction of a low signal-to-interference-ratio (SIR), cf. step 2041, according to further exemplary embodiments, the UE UE1 (Fig. 1) may apply the following criteria for selecting the phase shifting values psv (e.g., in form of the control signals cs1 of Fig. 9) of its antenna system 110, 110': a) identify the central beam steering angle $\alpha_{m^*}$ - and accordingly the group $m^*$ of candidate radiation patterns - that maximizes the signal-to-noise ratio (SNR), cf. step 2042, b) define a set of candidate interference suppression angular ranges for codebook level $n = 1$ as $\bar{\pi}_1 = \{\pi_{11}, \pi_{21}, \dots , \pi_{K1}\}$., c) for each codebook hierarchy level $n= 1 : N$, c1) for all candidate interference suppression angular ranges within $\bar{\pi}_n$, identify the antenna array pattern $\bar{\beta}_{m^*}^{\pi_{k_n^*}}$ and the corresponding angular interference suppression range $\pi_{k_n^*}$ that maximizes the SINR, cf. steps 2047, 2048, c2) increase the codebook hierarchy level, i.e., $n = n + 1$, cf. step 2046, c3) define the set of candidate interference suppression angular ranges for the updated codebook level $n$ as $\bar{\pi}_n = \{\pi_{1n}, \pi_{2n}, \dots , \pi_{Jn}\}$, where the candidate interference suppression angular ranges $\pi_{jn}$ are selected as those contained within the interference suppression angular range of the previous codebook level $\pi_{k_{(n-1)}^*}$, i.e., $\pi_{jn} \subseteq \pi_{k_{(n-1)}^*}$.

According to further exemplary embodiments, more specifically, the phase PH2 may comprise the following steps: determining whether there is a low SIR, cf. step 2041, e.g. similar to step 209 (i.e., determining whether said SIR is below said predetermined first threshold). If not, a conventional radiation pattern selection may be performed in step 2050, e.g. based on the principle of Reference Signal Received Power (RSRP) maximization, which is explained above with reference to Fig. 16. However, if said SIR is below said predetermined first threshold, the method of Fig. 13 may proceed with step 2042, e.g. selecting said group $m^*$ of candidate radiation patterns - that maximizes the signal-to-noise ratio (SNR). In step 2043, the second counter variable n is initialized to 1, e.g. n = 1, and in step 2044 it is determined whether the value of said second counter variable n is smaller than said predetermined number N of codebook hierarchy levels, e.g. n < N?. If yes, the method proceeds to step 2046, i.e. incrementing said second counter variable n, n = n + 1, and to step 2047, in which, out of all radiation patterns in said group m and in said codebook level n, the radiation patterns $\bar{\beta}_{m^*}^{\pi_{k_n^*}}$ is identified that maximizes the SINR. After that, in step 2048, the set of candidate interference suppression angular ranges of the next codebook level n = n + 1 is selected as those contained within the interference suppression angular range $\pi_{k_n^*}$ (which also maximizes the SINR).

As a result of applying the method according to exemplary embodiments as described above by Fig. 13, the mobile radio device UE1 (Fig. 1) may be able to quickly find the best set of phase shifting values psv - corresponding to a specific beampattern - to simultaneously a) guarantee a sufficient useful signal strength (which may e.g. be characterized by SNR), and b) provide an adequate interference suppression (which may e.g. be characterized by SINR).

For instance - as exemplarily illustrated in Fig. 14 - considering the exemplary setup described above with reference to Fig. 1 and an illustrative exemplary, nonlimiting embodiment of the proposed method with

$$M = \frac{90°}{22.5°} = 4$$

groups of radiation patterns ("antenna array patterns", cf. the directions $\alpha 1$, $\alpha 2$, $\alpha 3$, $\alpha 4$ of Fig. 14) to maximize RSRP per antenna panel, and N = 2 codebook levels with interference suppression ranges of $\varphi_1$ = 15° ($K_1$ = 90° / 15° = 6 divisions of the entire angular domain for interference suppression in the first codebook level) and $\varphi_2$ = 3° ($J_2$ = 15° / 3° = 5 divisions per interference suppression range in the second codebook level), a number of timeslots (e.g., in the sense of a 5G communications system 10) for determining a radiation pattern for use (e.g., according to step 210 of Fig. 2) may be substantially reduced from a value of $T \approx 64$ timeslots of an "optimized exhaustive search" according to some conventional approaches, to $T \approx M + K_1 + J_2 = 4 + 6 + 5 = 15$ timeslots when using the principle according to exemplary embodiments. The different selection steps are illustrated in Fig. 14 by the two dashed rectangles S1', S2', similar to the dashed rectangles S1, S2 of Fig. 12. Exemplarily, with reference to Fig. 14, the group of radiation patterns is selected which is associated with direction $\alpha 1$, corresponding with the main lobe L_1' being directed to the base station BS1. After that, selection S1' is made (with $\varphi_1$), as the angular interference suppression range of selection S1' fits to the direction of arrival (DoA) of interference I from interferer UEA to be suppressed. After that, selection S2' is made (with $\varphi_2$), as the angular interference suppression range of selection S2' even more specifically fits to the DoA of said interference I.

Further exemplary embodiments relate to an apparatus 100, cf. Fig. 1, for transmitting and/or receiving radio frequency, RF, signals, particularly for a mobile radio device UE1 for a wireless communications system 10, particularly a cellular communications system (e.g., according to the 5G standard), said apparatus 100 (Fig. 15) comprising an antenna system 110, 110' configured to selectively provide a plurality of different radiation patterns, wherein said apparatus 100 is configured to perform the method according to the embodiments.

Figure 15 schematically depicts a simplified block diagram of an apparatus 1000 according to further exemplary embodiments. As an example, the apparatus 100 as explained above may comprise a structure and/or configuration similar or identical to the apparatus 1000 of Fig. 15.

The apparatus 1000 of Fig. 15 comprises at least one calculating unit 1002 and at least one memory unit 1004 associated with (i.e., useably by) said at least one calculating unit 1002 for at least temporarily storing a computer program PRG and/or data DAT, wherein said computer program PRG is e.g. configured to at least temporarily control an operation of the apparatus 100 according to the embodiments (and/or of the mobile radio device UE1), e.g. the execution of a method according to the embodiments.

According to further exemplary embodiments, said data DAT may e.g. comprise said radiation pattern information RPI (Fig. 1), and/or further data that may be usable for selecting a specific one of said plurality of radiation patterns depending on said radiation pattern information RPI.

According to further exemplary embodiments, said at least one calculating unit 1002 may comprise at least one of the following elements: a microprocessor, a microcontroller, a digital signal processor (DSP), a programmable logic element (e.g., FPGA, field programmable gate array), an ASIC (application specific integrated circuit), hardware circuitry. According to further preferred embodiments, any combination of two or more of these elements is also possible.

According to further preferred embodiments, the memory unit 1004 comprises at least one of the following elements: a volatile memory 1004a, particularly a random-access memory (RAM), a non-volatile memory 1004b, particularly a Flash-EEPROM. Preferably, said computer program PRG is at least temporarily stored in said non-volatile memory 1004b. Data DAT, which may e.g. be used for executing the method according to the embodiments, may at least temporarily be stored in said RAM 1004a. Particularly, said radiation pattern information RPI may be stored in said ROM 1004b, which facilitates selecting a specific radiation pattern out of said plurality of radiation patterns based on said radiation pattern information RPI, especially for real-time use such as dynamic beam steering, e.g. for maximizing the SINR as experienced by the apparatus 100, 1000 and/or the UE UE1.

According to further preferred embodiments, an optional computer-readable storage medium SM comprising instructions, e.g. in the form of a/the computer program PRG, may be provided. As an example, said storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

According to further preferred embodiments, the apparatus 1000 may comprise a data interface 1006, preferably for bidirectional control and/or data exchange cx, e.g. with said antenna system 110, 110' and/or other devices, e.g. for selectively applying phase shifting values psv and/or respective control signals s1 (Fig. 9) to one or more antenna elements, whereby e.g. a specific radiation pattern may be selected.

As a further example, by means of said data interface 1006, an optional data carrier signal DCS may be received, e.g. from an external device (not shown), for example via a wired or a wireless data transmission medium. According to further preferred embodiments, the data carrier signal DCS may represent or carry the computer program PRG according to the embodiments, or at least a part thereof.

Further exemplary embodiments relate to a mobile radio device UE1 (Fig. 1) for a wireless communications system 10, particularly a cellular communications system, comprising at least one apparatus 100, 1000 according to the embodiments. In other words, according to further exemplary embodiments, the functionality of the apparatus 100, 1000 according to exemplary embodiments may at least partly (or fully) be integrated into said mobile radio device UE1.

Further exemplary embodiments relate to a use of the method according to the embodiments and/or of the apparatus 100, 1000 according to the embodiments and/or of the computer program PRG according to the embodiments and/or of the mobile radio device UE1 according to the embodiments for at least one of: a) beamforming, b) interference suppression, c) enhancing a communication performance, especially of 3GPP 5G New Radio, NR, user equipment UE1.

Further exemplary embodiments propose to use, cf. step 210 of Fig. 2, said radiation pattern information RPI as e.g. provided by step 200 of Fig. 2 for steering radiation nulls (i.e., reducing the amplitude of the side lobes) of a radiation pattern of said antenna system 110, 110' towards a direction where the interferer UEA (Fig. 1) is located. According to further exemplary embodiments, said step of steering may comprise at least one of the following steps: a) detection of the desired signal direction for beam alignment, b) detection of the undesired interference signal(s) I direction(s) for null alignment, c) selection and application of the radiation pattern that maximizes the signal-to-interference-plus-noise ratio (SINR). According to further exemplary embodiments, in plain words, using 210 said radiation pattern information RPI (Fig. 2) may comprise selection and application of the radiation pattern that provides a sufficient gain in direction of the transmitter BS1 (Fig. 1) and the lowest possible sidelobe(s) / (gain) null(s) in the direction(s) of the interferer(s) UEA.

According to further exemplary embodiments, since data traffic carried by said radio frequency signals RFS may be bursty in nature, and both the devices (e.g., UEA or UE1) and the radio frequency environment 10 may be dynamic, the time that the interference A2' remains present in a given direction may be relatively short. As a result, it may be beneficial if the mobile radio device UE1 can guarantee that the duration of the above steps a), b), c) of steering remains as short as possible to quickly detect and suppress the incoming interference and minimize the overhead dedicated to beam training/selection. This is, according to further exemplary embodiments, enabled by the principle of the embodiments.

## Claims

1. A method of operating an apparatus (100; 1000) for transmitting and/or receiving radio frequency, RF, signals (RFS), said apparatus (100; 1100) comprising an antenna system (110; 110') configured to selectively provide a plurality of different radiation patterns (RP1, RP2), wherein said method comprises: providing (200) radiation pattern information (RPI) characterizing at least one of a) a central beam steering angle ($\alpha$_m) associated with at least some of said different radiation patterns (RP1, RP2), b) an angular interference suppression range ($\pi$_k_n) characterizing an angular range of interference suppression associated with at least some of said different radiation patterns (RP1, RP2), said method further comprising: at least temporarily using (210) said radiation pattern information (RPI) for transmitting and/or receiving said RF signals (RFS),
   **characterized by** the method further comprising: mapping (2028) said angular interference suppression range ($\pi$_k_n) to a codebook level of a hierarchical codebook (CB) for performing beamforming, to select a specific radiation pattern (RP1) from said plurality of different radiation patterns (RP1, RP2), wherein the angular range of said interference sup-

pression range ($\pi\_k\_n$) is reduced as the codebook hierarchy level increases.

2. Method according to claim 1, wherein said apparatus (100) comprises at least one phase shifter (PS1, .., PS4) for selecting a specific radiation pattern from said plurality of different radiation patterns, and wherein said radiation pattern information (RPI) further comprises at least one of: c) phase shifting values (psv) associated with said different radiation patterns for controlling said at least one phase shifter (PS1, .., PS4), d) gain control values (gcv) associated with said different radiation patterns for controlling a gain of at least one amplifier (PA1, .., PA4; LNA1, .., LNA4).

3. Method according to at least one of the preceding claims, further comprising at least one of the following steps: a) characterizing (202) radiation patterns (RP1, RP2) of said antenna system (110; 110'), particularly characterizing L many, L > 1, radiation patterns of said antenna system (110; 110'), preferably by means of measurement(s) and/or simulation, b) determining (204) reception and/or transmission angles ($\alpha\_m$) for at least two radiation patterns (RP1, RP2) of said antenna system (110; 110'), c) determining (206) angular interference suppression ranges ($\pi\_k\_n$) for at least two radiation patterns (RP1, RP2) of said antenna system (110; 110'), d) determining (207) phase shifting values (psv) associated with said different radiation patterns for controlling said at least one phase shifter (PS1, .., PS4) and/or gain control values (gcv) associated with said different radiation patterns for controlling a gain of at least one amplifier, e) at least temporarily storing (208) at least one of the following elements: A) said radiation patterns (RP1, RP2) of said antenna system (110; 110'), B) said reception and/or transmission angles ($\alpha\_m$), C) said angular interference suppression ranges ($\pi\_k\_n$), D) said phase shifting values (psv).

4. Method according to at least one of the preceding claims, wherein said step of providing (200) said radiation pattern information (RPI) is performed prior to a real-time operation of said apparatus (100), and/or wherein said step of at least temporarily using (210) said radiation pattern information (RPI) for transmitting and/or receiving said RF signals (RFS) is performed during a real-time operation of said apparatus (100).

5. Method according to at least one of the preceding claims, further comprising: performing analog beamforming to select a specific radiation pattern (RP1) from said plurality of different radiation patterns (RP1, RP2).

6. Method according to at least one of the claims 3 to 5, wherein said step of characterizing (202) radiation patterns (RP1, RP2) of said antenna system (110; 110') comprises at least one of the following steps: a) characterizing (2020) a first radiation pattern (RP1), b) initializing (2021) a first counter variable (I), c) determining (2022) whether reception and/or transmission angles ($\alpha\_m$) of a predetermined number (L) of radiation patterns have been characterized, and, if so, c1) terminating (2022a) said step of characterizing (202) radiation patterns (RP1, RP2), and, if not, c2) selecting (2023) a next radiation pattern, wherein optionally said first counter variable (I) is incremented (2023), d) determining (2024) reception and/or transmission angles ($\alpha\_m$) of said next, i.e. currently selected, radiation pattern.

7. Method according to at least one of the preceding claims, further comprising: grouping (2026) radiation patterns of said plurality of different radiation patterns depending on their respective central beam steering angle ($\alpha\_m$).

8. Method according to at least one of the preceding claims, wherein performing beamforming comprises performing analog beamforming.

9. An apparatus (100; 1000) for transmitting and/or receiving radio frequency, RF, signals (RFS), said apparatus (100; 1000) comprising an antenna system (110; 110') configured to selectively provide a plurality of different radiation patterns (RP1, RP2), wherein said apparatus (100; 1000) is configured to: provide (200) radiation pattern information (RPI) characterizing at least one of a) a central beam steering angle ($\alpha\_m$) associated with at least some of said different radiation patterns (RP1, RP2), b) an angular interference suppression range ($\pi\_k\_n$) characterizing an angular range of interference suppression associated with at least some of said different radiation patterns (RP1, RP2), said apparatus (100; 1000) being further configured to: at least temporarily use (210) said radiation pattern information (RPI) for transmitting and/or receiving said RF signals (RFS), **characterized in that** said apparatus (100; 1000) is configured to map (2028) said angular interference suppression range ($\pi\_k\_n$) to a codebook level of a hierarchical codebook (CB) for performing beamforming, to select a specific radiation pattern (RP1) from said plurality of different radiation patterns (RP1, RP2),
wherein the angular range of said interference suppression range ($\pi\_k\_n$) is reduced as the codebook hierarchy level increases.

10. Apparatus (100; 1000) according to claim 9, wherein said apparatus (100; 1000) is configured to perform the method according to at least one of the claims 2 to 8.

**11.** A mobile radio device (UE1) for a wireless communications system (10), particularly a cellular communications system (10), comprising at least one apparatus (100; 1000) according to claim 9 or 10.

**12.** A computer program (PRG) comprising instructions which, when the program (PRG) is executed by a computer (1002), cause an apparatus (100) according to at least one of the claims 9 to 11 to carry out the method according to at least one of the claims 1 to 8.

**13.** A computer-readable storage medium (SM) comprising instructions (PRG) which, when executed by a computer (1002), cause the computer (1002) to carry out the method according to at least one of the claims 1 to 8.

**14.** A data carrier signal (DCS) carrying the computer program (PRG) according to claim 12.

**15.** A use of the method according to at least one of the claims 1 to 8 and/or of the apparatus (100; 1000) according to at least one of the claims 9 to 10 and/or of the computer program (PRG) according to claim 12 for at least one of: a) beamforming, b) interference suppression, c) enhancing a communication performance of 3GPP 5G New Radio, NR, user equipment (UE1).

**Patentansprüche**

**1.** Verfahren zum Betreiben einer Einrichtung (100; 1000) zum Übertragen und/oder Empfangen von Funkfrequenz(RF)-Signalen (RFS), wobei die Einrichtung (100; 1100) ein Antennensystem (110; 110') umfasst, das dazu ausgelegt ist, selektiv eine Vielzahl von verschiedenen Strahlungsmustern (RP1, RP2) bereitzustellen, wobei das Verfahren Folgendes umfasst: Bereitstellen (200) von Strahlungsmusterinformationen (RPI), die mindestens eines von a) einem zentralen Strahllenkungswinkel ($\alpha\_m$), der mit mindestens einigen der verschiedenen Strahlungsmuster (RP1, RP2) verknüpft ist, b) einem Winkelinterferenzunterdrückungsbereich ($\pi\_k\_n$), der einen Winkelbereich einer Interferenzunterdrückung charakterisiert, der mit mindestens einigen der verschiedenen Strahlungsmuster (RP1, RP2) verknüpft ist, charakterisieren, wobei das Verfahren ferner Folgendes umfasst: mindestens vorübergehendes Verwenden (210) der Strahlungsmusterinformationen (RPI) zum Übertragen und/oder Empfangen der RF-Signale (RFS), **dadurch gekennzeichnet, dass** das Verfahren ferner Folgendes umfasst: Zuordnen (2028) des Winkelinterferenzunterdrückungsbereichs ($\pi\_k\_n$) zu einer Codebuchebene eines hierarchischen Codebuchs (CB) zum Durchführen einer Strahlformung, um ein spezifisches Strahlungsmuster (RP1) aus der Vielzahl von verschiedenen Strahlungsmustern (RP1, RP2) auszuwählen, wobei der Winkelbereich des Interferenzunterdrückungsbereichs ($\pi\_k\_n$) reduziert wird, wenn die Codebuchhierarchieebene erhöht wird.

**2.** Verfahren nach Anspruch 1, wobei die Einrichtung (100) zum Auswählen eines spezifischen Strahlungsmusters aus der Vielzahl von verschiedenen Strahlungsmustern mindestens einen Phasenverschieber (PS1, .., PS4) umfasst, und wobei die Strahlungsmusterinformationen (RPI) ferner mindestens eines von Folgendem umfassen: c) Phasenverschiebungswerte (psv), die mit den verschiedenen Strahlungsmustern verknüpft sind, zum Steuern des mindestens einen Phasenverschiebers (PS1, .., PS4) , d) Verstärkungssteuerungswerte (gcv), die mit den verschiedenen Strahlungsmustern verknüpft sind, zum Steuern einer Verstärkung von mindestens einem Verstärker (PA1, .., PA4; LNA1, .., LNA4).

**3.** Verfahren nach mindestens einem der vorhergehenden Ansprüche, das ferner mindestens einen der folgenden Schritte umfasst: a) Charakterisieren (202) von Strahlungsmustern (RP1, RP2) des Antennensystems (110; 110'), insbesondere Charakterisieren von L vielen, L > 1, Strahlungsmustern des Antennensystems (110; 110'), vorzugsweise mittels einer oder mehrerer Messungen und/oder einer Simulation, b) Bestimmen (204) von Empfangs- und/oder Übertragungswinkeln ($\alpha\_m$) für mindestens zwei Strahlungsmuster (RP1, RP2) des Antennensystems (110; 110'), c) Bestimmen (206) von Winkelinterferenzunterdrückungsbereichen ($\pi\_k\_n$) für mindestens zwei Strahlungsmuster (RP1, RP2) des Antennensystems (110; 110'), d) Bestimmen (207) von Phasenverschiebungswerten (psv), die mit den verschiedenen Strahlungsmustern verknüpft sind, zum Steuern des mindestens einen Phasenverschiebers (PS1, .., PS4) und/oder Verstärkungssteuerungswerten (gcv), die mit den verschiedenen Strahlungsmustern verknüpft sind, zum Steuern einer Verstärkung von mindestens einem Verstärker, e) mindestens vorübergehendes Speichern (208) von mindestens einem der folgenden Elemente: A) der Strahlungsmuster (RP1, RP2) des Antennensystems (110; 110'), B) dem Empfangs- und/oder Übertragungswinkel ($\alpha\_m$), C) den Winkelinterferenzunterdrückungsbereichen ($\pi\_k\_n$) der Phasenverschiebungswerte (psv).

**4.** Verfahren nach mindestens einem der vorhergehenden Ansprüche, wobei der Schritt des Bereitstellens (200) der Strahlungsmusterinformationen (RPI) vor einem Echtzeitbetrieb der Einrichtung (100) durchgeführt wird, und/oder wobei der Schritt des mindestens vorübergehenden Verwendens (210) der Strahlungsmusterinformationen (RPI) zum Übertragen und/oder Empfangen der RF-Signale (RFS) während eines Echtzeitbetriebs der Einrichtung (100) durchgeführt wird.

5. Verfahren nach mindestens einem der vorhergehenden Ansprüche, das ferner Folgendes umfasst: Durchführen einer analogen Strahlformung, um ein spezifisches Strahlungsmuster (RP1) aus der Vielzahl von verschiedenen Strahlungsmustern (RP1, RP2) auszuwählen.

6. Verfahren nach mindestens einem der Ansprüche 3 bis 5, wobei der Schritt des Charakterisierens (202) von Strahlungsmustern (RP1, RP2) des Antennensystems (110; 110') mindestens einen der folgenden Schritte umfasst: a) Charakterisieren (2020) eines ersten Strahlungsmusters (RP1), b) Initialisieren (2021) einer ersten Zählervariable (1), c) Bestimmen (2022), ob Empfangs- und/oder Übertragungswinkel ($\alpha$_m) einer vorbestimmten Anzahl (L) von Strahlungsmustern charakterisiert wurden, und, wenn ja, c1) Beenden (2022a) des Schritts des Charakterisierens (202) von Strahlungsmustern (RP1, RP2) und, wenn nicht, c2) Auswählen (2023) eines nächsten Strahlungsmusters, wahlweise wobei die erste Zählervariable (1) inkrementiert (2023) wird, d) Bestimmen (2024) von Empfangs- und/oder Übertragungswinkeln ($\alpha$_m) des nächsten, d. h. des derzeit ausgewählten, Strahlungsmusters.

7. Verfahren nach mindestens einem der vorhergehenden Ansprüche, das ferner Folgendes umfasst: Gruppieren (2026) von Strahlungsmustern der Vielzahl von verschiedenen Strahlungsmustern in Abhängigkeit von deren jeweiligen zentralen Strahllenkungswinkel ($\alpha$_m).

8. Verfahren nach mindestens einem der vorhergehenden Ansprüche, wobei das Durchführen einer Strahlformung das Durchführen einer analogen Strahlformung umfasst.

9. Einrichtung (100; 1000) zum Übertragen und/oder Empfangen von Funkfrequenz(RF)-Signalen (RFS), wobei die Einrichtung (100; 1000) ein Antennensystem (110; 110') umfasst, das dazu ausgelegt ist, selektiv eine Vielzahl von verschiedenen Strahlungsmustern (RP1, RP2) bereitzustellen, wobei die Einrichtung (100; 1000) zu Folgendem ausgelegt ist: Bereitstellen (200) von Strahlungsmusterinformationen (RPI), die mindestens eines von a) einem zentralen Strahllenkungswinkel ($\alpha$_m), der mit mindestens einigen der verschiedenen Strahlungsmuster (RP1, RP2) verknüpft ist, b) einem Winkelinterferenzunterdrückungsbereich ($\pi$_k_n), der einen Winkelbereich einer Interferenzunterdrückung charakterisiert, der mit mindestens einigen der verschiedenen Strahlungsmuster (RP1, RP2) verknüpft ist, charakterisieren, wobei die Einrichtung (100; 1000) ferner zu Folgendem ausgelegt ist: mindestens vorübergehendes Verwenden (210) der Strahlungsmusterinformationen (RPI) zum Übertragen und/oder Empfangen der RF-Signale (RFS),

dadurch gekennzeichnet, dass die Einrichtung (100; 1000) dazu ausgelegt ist, den Winkelinterferenzunterdrückungsbereich ($\pi$_k_n) zum Durchführen einer Strahlformung einer Codebuchebene eines hierarchischen Codebuchs (CB) zuzuordnen (2028), um ein spezifisches Strahlungsmuster (RP1) aus der Vielzahl von verschiedenen Strahlungsmustern (RP1, RP2) auszuwählen, wobei der Winkelbereich des Interferenzunterdrückungsbereichs ($\pi$_k_n) reduziert wird, wenn die Codebuchhierarchieebene erhöht wird.

10. Einrichtung (100; 1000) nach Anspruch 9, wobei die Einrichtung (100; 1000) ferner dazu ausgelegt ist, das Verfahren nach mindestens einem der Ansprüche 2 bis 8 durchzuführen.

11. Mobile Funkvorrichtung (UE1) für ein drahtloses Kommunikationssystem (10), insbesondere ein zellulares Kommunikationssystem (10), die mindestens eine Einrichtung (100; 1000) nach Anspruch 9 oder 10 umfasst.

12. Computerprogramm (PRG), das Anweisungen umfasst, die, wenn das Programm (PRG) von einem Computer (1002) ausgeführt wird, eine Einrichtung (100) nach mindestens einem der Ansprüche 9 bis 11 veranlasst, das Verfahren nach mindestens einem der Ansprüche 1 bis 8 umzusetzen.

13. Computerlesbares Speichermedium (SM), das Anweisungen (PRG) umfasst, die, wenn sie von einem Computer (1002) ausgeführt werden, den Computer (1002) veranlassen, das Verfahren nach mindestens einem der Ansprüche 1 bis 8 umzusetzen.

14. Datenträgersignal (DCS), auf dem sich das Computerprogramm (PRG) nach Anspruch 12 befindet.

15. Verwendung des Verfahrens nach mindestens einem der Ansprüche 1 bis 8 und/oder der Einrichtung (100; 1000) nach mindestens einem der Ansprüche 9 bis 10 und/oder des Computerprogramms (PRG) nach Anspruch 12 für mindestens eines von Folgendem: a) Strahlformung, b) Interferenzunterdrückung, c) Verbesserung einer Kommunikationsleistung der 3GPP-5G-New-Radio(NR)-Teilnehmereinrichtung (UE1).

**Revendications**

1. Procédé pour faire fonctionner un appareil (100 ; 1000) pour transmettre et/ou recevoir des signaux de radiofréquence, RF, (RFS), ledit appareil (100 ; 1100) comprenant un système d'antenne (110 ; 110') configuré pour fournir sélectivement une pluralité de diagrammes de rayonnement (RP1, RP2) différents, dans lequel ledit procédé comprend : la fourniture (200) d'informations de diagramme de rayonnement (RP1) caractérisant au moins l'un parmi a) un angle d'orientation de faisceau central ($\alpha\_m$) associé à au moins certains desdits diagrammes de rayonnement (RP1, RP2) différents, b) une plage angulaire de suppression d'interférences ($\pi\_k\_n$) caractérisant une plage angulaire d'une suppression d'interférences associée à au moins certains desdits diagrammes de rayonnement (RP1, RP2) différents, ledit procédé comprenant en outre : l'utilisation, au moins temporairement (210), desdites informations de diagramme de rayonnement (RP1) pour transmettre et/ou recevoir lesdits signaux RF (RFS),
caractérisé en ce que le procédé comprend en outre : le mappage (2028) de ladite plage angulaire de suppression d'interférences ($\pi\_k\_n$) à un niveau de livre de codes d'un livre de codes hiérarchique (CB) pour effectuer une formation de faisceaux afin de sélectionner un diagramme de rayonnement (RP1) spécifique dans ladite pluralité de diagrammes de rayonnement (RP1, RP2) différents, dans lequel la plage angulaire de ladite plage de suppression d'interférences ($\pi\_k\_n$) est réduite à mesure que le niveau hiérarchique de livre de codes augmente.

2. Procédé selon la revendication 1, dans lequel ledit appareil (100) comprend au moins un déphaseur (PS1, ..., PS4) pour sélectionner un diagramme de rayonnement spécifique dans ladite pluralité de diagrammes de rayonnement différents, et dans lequel lesdites informations de diagramme de rayonnement (RP1) comprennent en outre au moins des valeurs parmi : c) des valeurs de déphasage (psv) associées auxdits diagrammes de rayonnement différents pour commander ledit au moins un déphaseur (PS1, ..., PS4), d) des valeurs de commande de gain (gcv) associées auxdits diagrammes de rayonnement différents pour commander un gain d'au moins un amplificateur (PA1, ..., PA4 ; LNA1, ..., LNA4).

3. Procédé selon au moins l'une des revendications précédentes, comprenant en outre au moins l'une des étapes suivantes : a) caractériser (202) des diagrammes de rayonnement (RP1, RP2) dudit système d'antenne (110 ; 110'), en particulier caractériser L diagrammes de rayonnement dudit système d'antenne (110 ; 110'), avec L > 1, de préférence au moyen de mesure(s) et/ou d'une simulation, b) déterminer (204) des angles de réception et/ou d'émission ($\alpha\_m$) pour au moins deux diagrammes de rayonnement (RP1, RP2) dudit système d'antenne (110 ; 110'), c) déterminer (206) des plages angulaires de suppression d'interférences ($\pi\_k\_n$) pour au moins deux diagrammes de rayonnement (RP1, RP2) dudit système d'antenne (110 ; 110'), d) déterminer (207) des valeurs de déphasage (psv) associées auxdits diagrammes de rayonnement différents pour commander ledit au moins un déphaseur (PS1, ..., PS4) et/ou des valeurs de commande de gain (gcv) associées auxdits diagrammes de rayonnement différents pour commander un gain d'au moins un amplificateur, e) stocker au moins temporairement (208) au moins l'un des éléments suivants : A) lesdits diagrammes de rayonnement (RP1, RP2) dudit système d'antenne (110 ; 110'), B) lesdits angles de réception et/ou d'émission ($\alpha\_m$), C) lesdites plages angulaires de suppression d'interférences ($\pi\_k\_n$), D) lesdites valeurs de déphasage (psv).

4. Procédé selon au moins l'une des revendications précédentes, dans lequel ladite étape de fourniture (200) desdites informations de diagramme de rayonnement (RP1) est effectuée avant un fonctionnement en temps réel dudit appareil (100), et/ou dans lequel ladite étape d'utilisation, au moins temporairement (210), desdites informations de diagramme de rayonnement (RP1) pour transmettre et/ou recevoir lesdits signaux RF (RFS) est effectuée pendant un fonctionnement en temps réel dudit appareil (100).

5. Procédé selon au moins l'une des revendications précédentes, comprenant en outre : la réalisation d'une formation de faisceau analogique afin de sélectionner un diagramme de rayonnement (RP1) spécifique dans ladite pluralité de diagrammes de rayonnement (RP1, RP2) différents.

6. Procédé selon au moins l'une des revendications 3 à 5, dans lequel ladite étape de caractérisation (202) de diagrammes de rayonnement (RP1, RP2) dudit système d'antenne (110 ; 110') comprend au moins l'une des étapes suivantes : a) caractériser (2020) un premier diagramme de rayonnement (RP1), b) initialiser (2021) une première variable de compteur (1), c) déterminer (2022) si des angles de réception et/ou d'émission ($\alpha\_m$) d'un nombre prédéterminé (L) de diagrammes de rayonnement a été caractérisé, et dans l'affirmative, c1) terminer (2022a) ladite étape de caractérisation (202) de diagrammes de rayonnement (RP1, RP2), et si ce n'est pas le cas, c2) sélectionner (2023) un diagramme de rayonnement suivant, facultativement dans lequel ladite première variable de compteur (1) est incrémentée (2023), d) déterminer (2024) des angles de réception et/ou d'émission ($\alpha\_m$) dudit diagramme de rayonnement suivant, c'est-à-dire actuellement sélectionné.

7. Procédé selon au moins l'une des revendications précédentes, comprenant en outre : le regroupement (2026) des diagrammes de rayonnement de ladite pluralité de diagrammes de rayonnement différents en fonction de leurs angles d'orientation de faisceau central ($\alpha\_m$) respectifs.

8. Procédé selon au moins l'une des revendications précédentes, dans lequel la réalisation d'une formation de faisceaux comprend la réalisation d'une formation de faisceau analogique.

9. Appareil (100 ; 1000) pour transmettre et/ou recevoir des signaux de radiofréquence, RF, (RFS), ledit appareil (100 ; 1000) comprenant un système d'antenne (110 ; 110') configuré pour fournir sélectivement une pluralité de diagrammes de rayonnement (RP1, RP2) différents, dans lequel ledit appareil (100 ; 1000) est configuré pour : fournir (200) des informations de diagramme de rayonnement (RP1) caractérisant au moins l'un parmi a) un angle d'orientation de faisceau central ($\alpha\_m$) associé à au moins certains desdits diagrammes de rayonnement (RP1, RP2) différents, b) une plage angulaire de suppression d'interférences ($\pi\_k\_n$) caractérisant une plage angulaire d'une suppression d'interférences associée à au moins certains desdits diagrammes de rayonnement (RP1, RP2) différents, ledit appareil (100 ; 1000) étant en outre configuré pour : utiliser au moins temporairement (210) lesdites informations de diagramme de rayonnement (RP1) pour transmettre et/ou recevoir lesdits signaux RF (RFS), **caractérisé en ce que** ledit appareil (100 ; 1000) est configuré pour mapper (2028) ladite plage angulaire de suppression d'interférences ($\pi\_k\_n$) à un niveau de livre de codes d'un livre de codes hiérarchique (CB) pour effectuer une formation de faisceaux afin de sélectionner un diagramme de rayonnement (RP1) spécifique dans ladite pluralité de diagrammes de rayonnement (RP1, RP2) différents,
dans lequel la plage angulaire de ladite plage de suppression d'interférences ($\pi\_k\_n$) est réduite à mesure que le niveau hiérarchique de livre de codes augmente.

10. Appareil (100 ; 1000) selon la revendication 9, dans lequel ledit appareil (100 ; 1000) est configuré pour effectuer le procédé selon au moins l'une des revendications 2 à 8.

11. Dispositif radio mobile (UE1) pour un système de communications sans fil (10), en particulier un système de communications cellulaires (10), comprenant au moins un appareil (100 ; 1000) selon la revendication 9 ou 10.

12. Programme informatique (PRG) comprenant des instructions qui, lorsque le programme (PRG) est exécuté par un ordinateur (1002), amènent un appareil (100) selon au moins l'une des revendications 9 à 11 à mettre en oeuvre le procédé selon au moins l'une des revendications 1 à 8.

13. Support de stockage lisible par ordinateur (SM) comprenant des instructions (PRG) qui, lorsqu'elles sont exécutées par un ordinateur (1002), amènent l'ordinateur (1002) à mettre en oeuvre le procédé selon au moins l'une des revendications 1 à 8.

14. Signal porteur de données (DCS) transportant le programme informatique (PRG) selon la revendication 12.

15. Utilisation du procédé selon au moins l'une des revendications 1 à 8 et/ou de l'appareil (100 ; 1000) selon au moins l'une des revendications 9 et 10 et/ou du programme informatique (PRG) selon la revendication 12 pour effectuer au moins l'une parmi : a) une formation de faisceaux, b) une suppression d'interférences, c) une amélioration des performances de communication d'un équipement utilisateur (UE1) 3GPP 5G de nouvelle radio, NR.

## Fig. 1

## Fig. 2

## Fig. 3A

## Fig. 3B

# Fig. 4

RPI

α_m

π_k_n

psv, gcv

# Fig. 5

202

RP1, RP2

204

α_m

206

π_k_n

207

psv, gcv

208

# Fig. 6

209

211

210

## Fig. 7

## Fig. 8

## Fig. 9

## Fig. 10

## Fig. 11

## Fig. 12

## Fig. 14

# Fig. 13

# Fig. 15

# Fig. 16

## Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013156120 A1

**Non-patent literature cited in the description**

- A Sidelobe Suppression Technique for Millimeter Wave Beamforming. **CHUNG HYEONJIN et al.** 2018 24TH ASIA-PACIFIC CONFERENCE ON COMMUNICATIONS (APCC). IEEE, 12 November 2018, 592-597

- **RFS.** APX13GV-15DV-C, Optimizer Dual-Band Dual Polarized Panel Antenna. *RFS Product Catalog,* 05 May 2011
- *3GPP TS 38.101-2 V15.2.0,* June 2018